# EUROPEAN PATENT APPLICATION

(11) **EP 3 300 611 A1**
(43) Date of publication of application: **04.04.2018**
(21) Application number: 17193466.4
(22) Date of filing: 27.09.2017
(51) Int. Cl.: A23L 33/115, A23L 33/20, A23L 35/00, A23L 33/125, A23G 3/42, A23L 13/40, A21D 2/18, A23D 7/005, A23D 7/015, A23D 9/007

(54) **INULIN-BASED COMBINATION AND USE THEREOF AS SUBSTITUTE OF FATS IN FOOD COMPOSITIONS AND FORMULATIONS**

(30) Priority: 29.09.2016 IT 201600097941
(71) Applicant: Università degli Studi di Foggia, 71122 Foggia (IT)
(72) Inventor: SEVERINI, Carla, I-00149 Roma RM (IT); FIORE, Anna Giuseppina, I-71121 Foggia FG (IT); DEROSSI, Antonio, I-76121 Barletta BT (IT)
(74) Representative: Trupiano, Federica

(57) **Abstract**

The present invention refers to an inulin-based combination, in particular of inulin in a mixture with water and fats with low content of saturated fatty acids and cholesterol, which can be used to partially or totally substitute the fats traditionally added in several food formulations.

## Description

### Abstract of the Invention

The present invention refers to an inulin-based combination, in particular of inulin in a mixture with water and fats with low content of saturated fatty acids and cholesterol, which can be used to partially or totally substitute the fats traditionally added in several food formulations.

### Technical Field

Inulin is a fructo-oligosaccharide (FOS) naturally occurring in vegetable world which is not absorbed by the intestine and presents healthy and functional properties. In particular, inulin performs a prebiotic function, by acting to improve the intestinal flora of mammals, in particular human beings. In addition, inulin has other properties which play a beneficial effect on health, such as the ability to reduce blood sugars swings, to prevent the formation of toxic compounds thus improving the liver function, to prevent cardiovascular diseases and reduce the arterial pressure due to the reduction of blood lipids and cholesterol.

In addition, some research works point out that inulin is a promoter of iron and calcium absorption at intestinal level and, for this reason, it contributes to prevent anemia and bone density loss.

It is known that cholesterol and saturated fatty acids excess, which are found mainly in animal fats, are dangerous for the health. Nevertheless they are commonly used in the food industry as basic ingredients of several products, such as sausages, leavened baked goods, sweet doughs, sweet creams, etc. Therefore, potentially dangerous fats such as butter, margarine, guanciale fat, hydrogenated vegetable fats, as well as pure or refined vegetable oils such as palm oil and the like, are found in significant amounts in daily consumed foods.

It is also known that such fats increases the risk of diseases such as diabetes, hypercholesterolemia, arterial hypertension, obesity and other cardiovascular diseases, such as atherosclerosis, with related complications. For this reason, consumers are turning more and more frequently to the use of foods with low content of fats considered dangerous for the health and organism well-being.

Unfortunately, most of the foods with reduced content of potentially dangerous fats have often poor palatability and poorly pleasant texture, thus resulting to be of little satisfaction to the consumer. By way of example, attempts to substitute guanciale fat, during the production of sausages, with other substances such as proteins, fibers, carbohydrates or vegetable fats, resulted in production technological problems, such as the loss of oil during the aging step, the excessive dehydration and the resulting weigh reduction (anti-economical factor) as well as the appearance of major alterations of the typical organoleptic features of these products, such as texture, juiciness and palatability.

Therefore there is the need of providing a combination which could substitute the potentially dangerous fats (saturated fatty acids and cholesterol) in food formulations, which allows at the same time to maintain, in said formulations, sensory properties and physical characteristics (such as texture, spreadability, palatability, etc.) completely comparable to those of the corresponding traditional food products, and which is moreover compatible with the industrial production processes.

### Objects of the Invention

It is an object of the invention to provide a combination which can replace, partially or totally, the amount of fats and cholesterol in food formulations.

It is a further object of the invention to provide a combination which can replace, partially or totally, the potentially dangerous fats for the health in food formulations. It is a further object of the invention to provide a food composition comprising the combination of the invention together with other edible components, which can replace, partially or totally, the potentially dangerous fats for the health in food formulations.

It is another object of the invention to provide a food formulation comprising the combination or composition of the invention, as well as functional foods comprising the combination or composition of the invention.

### Brief Description of the Drawings

Figure 1 shows an example of a combination according to the invention.
Figure 2 shows some biscuit samples prepared by replacing traditional butter with the combination according to the invention, before and after cooking.
Figure 3 reports the colorimetric indexes (brightness, L*, red index, a*, and yellow index, b*) of cooked biscuit samples prepared with the combination according to the invention.
Figure 4 shows the values of water activity, humidity and texture of biscuit samples prepared with the combination according to the invention.
Figure 5 shows the results of the sensory tests carried out on the biscuit samples prepared with the combination according to the invention.
Figures 6 and 7 report the results of the comparison sensory tests carried out on salami samples of traditional type and salamis wherein the guanciale fat has been replaced with olive oil together with the combination according to the invention.

### Description of the Invention

Subject-matter of the invention, according to one of the aspects thereof, is a combination consisting of inulin, water and at least one fat with low content of saturated fatty acids and cholesterol.

The combination of the invention is preferably in emulsion form, more preferably in emulsion form with different viscosity levels, in order to be used in food products having different textures.

Inulin is a well-known compound of vegetable origin, included in the class of food fibers and particularly among the fructo-oligosaccharides (FOS).

"Fat with low content of saturated fatty acids and cholesterol", hereinafter defined also as "fat according to the invention", means a fat phase having saturated fatty acid content preferably lower than 20%, more preferably lower than 15%, only trace amounts of cholesterol and high content of mono- and/or poly-unsaturated fatty acids.

According to a preferred embodiment, the fat according to the invention is a vegetable oil with low content of saturated fatty acids, preferably selected from olive oil of any purity grade (extra virgin, virgin, olive oil, olive pomace and olive oil), corn oil, sunflower oil, peanut oil, walnut oil, colza oil, safflower oil, grape seed oil, soybean oil, wheat germ oil, rice bran oil, linseed oil, and mixtures thereof. Alternatively, fish oil, such as for example cod liver oil, can be used.

According to a more preferred embodiment, the fat according to the invention is selected from extra virgin olive oil, virgin olive oil and olive oil.

The inulin/water/fat reciprocal weight ratios according to the invention are preferably in the ranges 5-75/10-60/15-75, more preferably in the ranges 2.5-37.5/5-30/7.5-37.5 even more preferably in the range 32.5/26.8/40.6, expressed as grams over 100 grams of combination (1.2/1/1.5 as reciprocal ratio).

According to one of the embodiment above, the combination according to the invention is obtained by mixing and emulsifying the fat according to the invention, inulin and water. In particular, the invention provides the incorporation of inulin into the fat according to the invention until the formation of a homogeneous compound which, after the addition of water and a following mechanical stirring step, achieves the physical state of an emulsion. By varying the mixing ratios of inulin, water and fat, according to the invention, and by varying the stirring conditions, the combination can adopt variable textures, from those more similar to a fat of animal origin, such as for example pork guanciale, butter, lard, up to a texture more similar to a cream which can be potentially applied to the production of baked goods and/or sweets. By way of example, for a texture similar to an animal fat (butter or guanciale) inulin/water/oil reciprocal ratios of about 1.2/1/1.5 can be used, while for a texture closer to a spreadable cream (crème patissière) reciprocal ratios of about 1/1/1 can be used.

The preparation process of the invention, as described above, is another aspect of the invention.

Subject-matter of the invention, according to another of the aspects thereof, is a food composition comprising the combination of the invention described above, together with other edible components. By way of example, the food composition of the invention can comprise, in addition to the combination according to the invention, also small quantities of other ingredients such as flavorings, color additives, preservatives, antioxidants, micronutrients, etc., provided that they are edible, compatible with the three major components of the emulsion and do not alter the stability thereof.

The use of the food combination or composition, subject-matter of the invention in the production of food formulations containing fats, constitutes a further aspect of the invention, particularly for the substitution of all or part of the fats rich in cholesterol and saturated fatty acids, such as butter, lard, guanciale, lardo and other animal fats, or hydrogenated vegetable fats and refined vegetable fats.

In addition to the substitution of potentially dangerous fats, the food combination or composition according to the invention can be used with the aim of limiting the calorie content. The substitution of the food fat with the combination of the invention, indeed, introduces a smaller amount of fat, inulin fractions (with a low calorie content) and water overall.

The food formulations comprising the food combination or composition of the invention constitute a further subject-matter of the invention.

"Food formulations" and "food formulations containing fats" mean herein those foods industrially and/or home-made prepared which are obtained by mixing various substances with fats, e.g. sausages, such as salamis, pork sausages, mortadella, frankfurters and the like; furthermore sweets, i.e. cakes, biscuits, pastries; baked goods, and then piadinas, breadsticks; food creams, such as béchamel and sweet creams; precooked and ready-to-use foods, such as risotto, soups and ready-to-eat pastas; etc.

Moreover, the combination and composition subject-matter of the invention can be used as dressing/base for culinary preparations such as for example to cream or as a base for the risotto.

The food formulations comprising the combination and/or composition of the invention have better nutritional values with respect to the corresponding foods prepared with conventional fats. As a matter of fact, the food formulations of the invention boast about lower total fat content, thus reducing the total calories of the food, and use qualitatively better fats (with reduced content of saturated fatty acids and cholesterol).

The mass fractions which can be used according to the invention are between 1 and 15% for the inulin, between 3 and 15% for the oil, between 2 and 12% for the water in all their possible combinations, preferably between 8 and 10% for the inulin, between 5 and 10% for the oil, between 6.5 and 8.5% for the water in all their possible combinations depending on the use and physical characteristics (viscosity, spreadability, etc.) more suited to the food formulation in which the invention will be used to reduce the content of vegetable and/or animal saturated fatty acids.

The above mentioned percentages are expressed as weight, with respect to the total weight of the food formulation of the invention.

Moreover, the properties arising from the use of inulin make the food formulations prepared with the combination according to the invention or with the food composition of the invention, "functional foods", where "functional food" means a food with beneficial and protective properties for the organism which, when included into an equilibrated diet, favors the consumer's good health. For example, if a food is prepared by using a combination or composition of the invention, prepared for example with extra virgin olive oil, such food will contain several substances with healthy properties, such as vitamin E, tocopherols and other compounds with high biological value; in the same way, for example, if linseed oil or fish oil would be used, an enrichment of the combination in polyunsaturated acids (omega-3, omega-6) would be obtained; moreover, the food will clearly also contain a functional prebiotic substance, as it is the inulin. In addition to the advantageous substances for the organism already present in the components of the combination, the composition of the invention can be further added with other healthy compounds, such as fibers, vitamins, other polyunsaturated fatty acids, minerals, etc., provided that they are compatible among each other and with the components of the combination.

For the reasons set forth above, the food formulations obtained by adding/using the combination or composition according to the invention:
- can have prebiotic function, favoring the development of the gut flora in the human being and other mammals, and thus improving the bowl function;
- can favor the reduction of blood sugar swings;
- can prevent the formation of toxic compounds, resulting in an improvement of the liver function;
- can prevent cardiovascular diseases, also thanks to the reduction of the arterial pressure resulting from the reduction of blood lipids and cholesterol.

For example, thanks to the use of the food combination or composition of the invention as a substitute of the fat fraction in the food formulations, it is possible to reduce the cholesterol content of a conventional salami of about 40%.

Surprisingly, the use of the food combination or composition of the invention to substitute conventional fats, does not alter the organoleptic characteristics of the food. Moreover, as it is shown in the experimental section of the present description, the foods containing the food combination or composition of the invention resulted to be more appreciated than the corresponding foods wherein the fat fraction has been only partially reduced (i.e. not substituted with the combination or composition of the present invention).

Moreover, it should be noted that the use of the food combination or composition of the invention in the food formulations wherein animal fats are conventionally added, e.g. butter in sweets, allows the consumption of said foods also by subjects following a vegan diet. Moreover, for this kind of diet, the use of the combination can also represent an integration or enrichment of the diet with functional components, such as for example vitamin B 12 or omega-3 fatty acids.

In addition to the significant above-mentioned advantages, it has been surprisingly noted that the food combination and composition of the invention perfectly fit with the technological production processes, thus solving technological problems and improving the transformation steps which affect the quality of the end products.

For example, in shortbread biscuits, the substitution of 50% of the butter with the food combination or composition of the invention showed very satisfactory results and also the process steps, such as mixing, kneading, lamination, molding and cooking, resulted to be very readily feasible with the traditional production conditions.

It is therefore clear that the food combination and composition of the invention solve the problems set in an innovative way, with respect to technological solutions adopted at the industrial level, and at the same time offer some advantages in the industrial processing of the foods containing them.

### Experimental Section

### Example 1

### Preparation of a combination as butter substitute

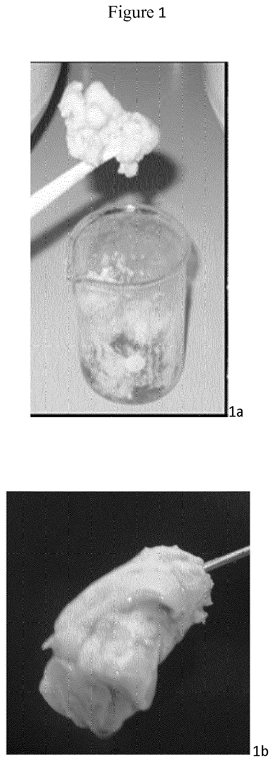

The combination as butter substitute is obtained by incorporating 8-10 g of inulin in 3-10 g of extra virgin olive oil until the formation of a homogeneous compound. This is followed by the addition of 5.5-8.5 g of water and the mixing until obtaining an emulsion with appearance, texture and color similar to butter. The so-obtained emulsion is shown in Figure 1.

### Example 2

### Use of the combination of Example 1 for the preparation of shortbread biscuits

Shortbread biscuits have been prepared according to conventional techniques, by using the combination of Example 1 as substitute of the fat fraction (i.e. butter). The basic formula used for the short pastry has been prepared as reported in the following: 50% of flour, 15% of sugar, 15% of eggs and 20% of the combination of Example 1. The dough obtained by mixing the ingredients has been laminated with a semi-manual system in order to obtain 3 mm thick plates, which have been subsequently baked and undergone chemico-physical and sensory analyses. The biscuits produced according to the subject-matter of the invention are classified in the following as B3.

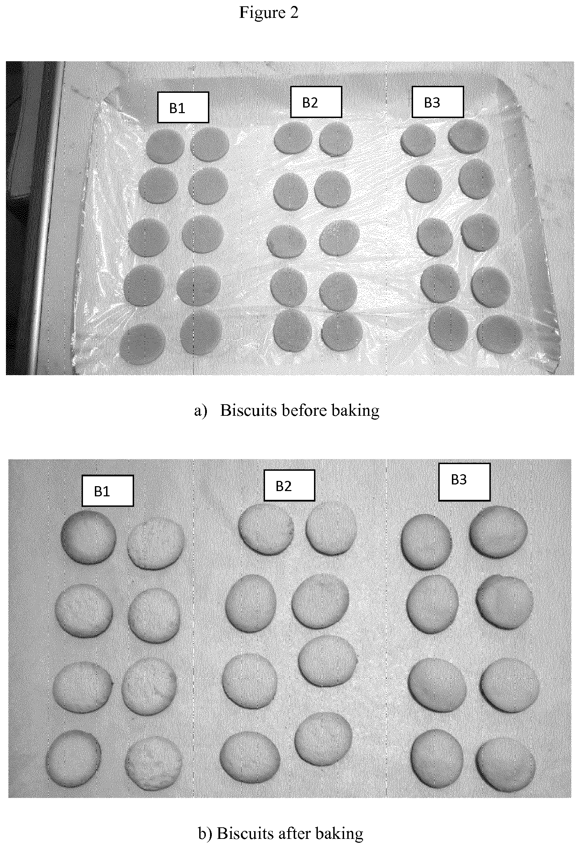

In addition, biscuits wherein the combination of Example 1 has been substituted, at the same percentages, with butter (B1) and extra virgin olive oil (B2) have been prepared. Therefore samples B1 and B2 constitute the "controls" against which the sample prepared with the combination according to the invention (B3) has been compared. An image of the three kinds of biscuits before and after cooking is depicted in Figure 2.

The three types of biscuits underwent the following chemico-physical analyses:
- determination of the values relative to the colorimetric indexes of brightness (L*), red index (a*) and yellow index (b*);
- determination of the water activity values;
- determination of the humidity and texture;
- sensory test.

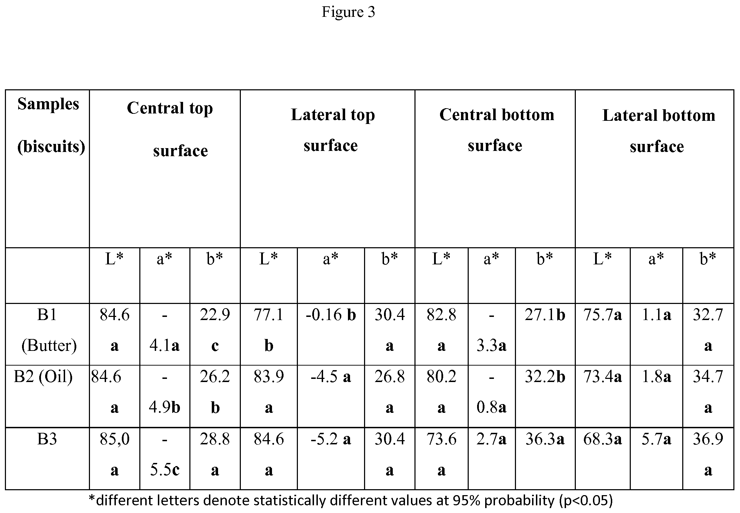

With respect to the colorimetric indexes of brightness (L*), red index (a*) and yellow index (b*), the results of the color measurements in different spots of the biscuits (central and lateral, top surface; central and lateral, bottom surface) of the three compared formulations (B1, B2 and B3) are depicted in Figure 3. The brightness of the central top surface of B3 biscuits does not significantly differ from the one of the other two kinds (B1 and B2) whereas the values of the red index, a*, and the yellow index, b*, resulted to be significantly different between each other. The lateral top surface (edge) has been the one mostly affected by cooking; as a matter of fact, the brightness of the biscuits formulated with oil (B2) and biscuits formulated with the combination of Example 1 (B3) resulted to be significantly higher with respect to that of the biscuits formulated with butter (B1).

The bottom surfaces, central and lateral both in terms of brightness and red index and yellow index, resulted to be not statistically different, thus confirming that significant differences in the color of the three types of doughs during cooking were not detected.

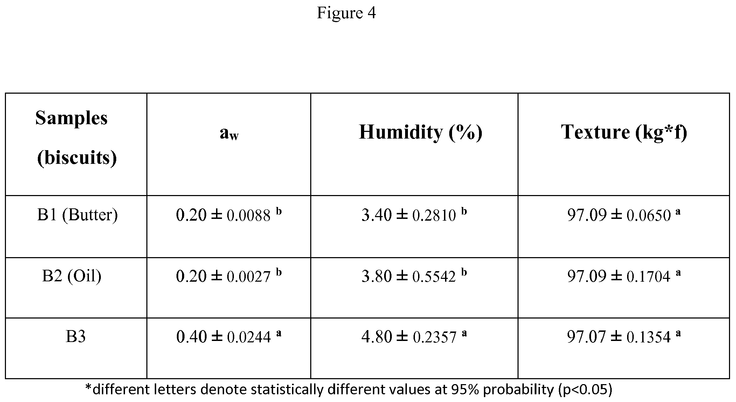

The mean values of the chemico-physical parameters of the water activity (a_{w}), humidity and texture of samples B1, B2, B3, are reported in Figure 4.

Significantly higher values of a_{w} and humidity (%) have been found for the B3 biscuits. Such results are in agreement with the composition of the biscuits since these samples, obtained with the combination of Example 1 (B3), contained a higher percentage of humidity coming from the water fraction being in the fat substitute according to the invention. In spite of this difference in the water content, significant differences in the texture of the three types of biscuits have not been found, as it can be observed from the results reported in Figure 4.

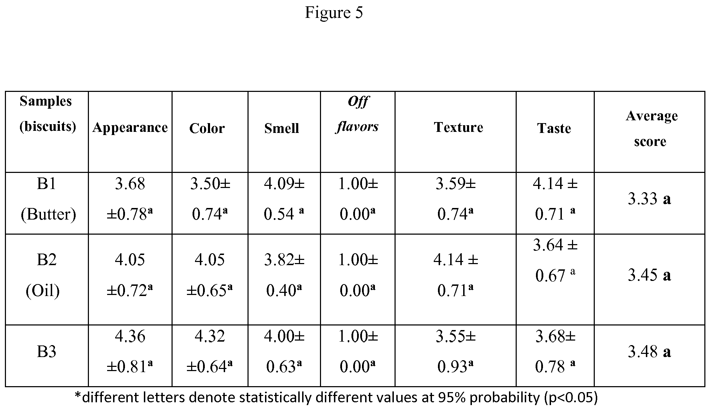

In addition, a sensory test with an untrained referee panel has been performed where they were asked to give a score from 1 (less preferred) to 5 (more preferred) per each of the following sensory characteristics: appearance, color, smell, texture and taste. The results are reported in Figure 5. Assigned scores did not evidence significant differences in the judgment of each tested characteristic, as well as the mean total score, thus indicating that significant differences from the hedonistic point of view were not found.

### Example 3

### Application of the combination of Example 1 for the preparation of meat sausages with low content of saturated fats

Short aging salamis have been prepared, containing from 60 to 90% of low-fat pork meat constituted by a mixture of different anatomical cuts. The fraction of guanciale fat traditionally used for the preparation of these foods has been substituted with the combination of Example 1. The salami samples have been prepared according to the following mass fractions of the ingredients:

| **Ingredients** | **Mass fraction (%)** |
|---|---|
| Low-fat pork | 60-90 |
| Olive oil | 3-15 |
| Inulin | 1-10 |
| water | 2-8.5 |
| NaCl | 1-2.5 |
| D-Glucose | 0.5 |
| Fennel seeds | 0.1 |
| Garlic | 0.01 |
| Black pepper | 0.1 |
| Powdered milk | 2 |
| Maltodextrins | 1 |
| Ascorbic acid | 0.09 |
| Potassium nitrate (ppm) | 180 |
| Sodium nitrate (ppm) | 75 |
| White wine (ml/100 g) | 0.2 |

The combination of Example 1 has been used as guanciale fat substitute: it has been added to the low-fat meat after having been ground and size reduced by means of an extrusion die having hole diameter of 4.5 mm and mixed to the other ingredients in the kneading step. After the mixing and kneading steps of all the ingredients, the production method for the salamis provided a short-period of refrigerated break (1-2 hours at 4°C), in order to allow the diffusion of the different ingredients in the mixture. The mixture has been then made into sausages in casing of 45 mm diameter. The salamis obtained after the casing step underwent a drying out step under controlled hygrometric conditions: temperature of 24°C and relative humidity (R.H. %) of 80-85% for about 2 days. Later the salamis underwent an aging step at a temperature of 20°C and relative humidity of 80%, for a variable period from 14 to 19 days in order to reach a_{w} values < 0.90, which are sufficient to inhibit the most important pathogenic microorganisms and thus reach the sanitary safety. The obtained salamis showed excellent qualitative, nutritional and sensory characteristics in addition to the fact of having healthy and functional properties. As a matter of fact, the salamis prepared by adding the combination according to the invention had lower content of total calories, a better nutritional composition thanks to the present kind of fat (extra virgin olive oil replacing the guanciale fat) which is rich in unsaturated fatty acids, mainly monounsaturated, in tocopherols and vitamin E. Moreover, the cholesterol content has been significantly reduced (p<0.05) with respect to traditional salami; as a matter of fact, for the two products, values equal to 88.02±2.58 mg/100 g and 55.05±1.11 mg/100 g, respectively, have been measured (Table 1).

**Table 1: Cholesterol content in salami samples obtained by means of traditional formulation and using the combination of Example 1.**

| **Samples (Salamis)** | **Cholesterol (mg/100g)** |
|---|---|
| Traditional formulation | 88.02±2.58^{a} |
| Formulation with the combination of Example 1 | 50.05±1.11^{b} |

### 3.1 - Sensory test of the salami samples obtained by using the combination of Example 1

A sensory evaluation has been carried out by means of a duo-trio test wherein three tastes, two identical one another and a third one different, have been presented to the tasters. The tasters were asked to recognize, among the three tastes, the salami of different type. The test has been performed on two kinds of salamis:
Sample A. partially reduced in the saturated fat fraction (50%) without the combination of the invention, but with extra virgin olive oil;
Sample B. totally substituted in the saturated fat fraction (100%) with the combination of Example 1.

The two kinds of salami were therefore the following:
Sample A: containing 90% of low-fat pork meat and 10% of fat constituted by 5% of guanciale and 5% of extra virgin olive oil, without the combination according to the invention;
Sample B: containing 75% of low-fat pork meat and wherein the fat component (10%) has been totally substituted with the combination of Example 1. Under these conditions, the combination of the invention constituted the 25 wt% with respect to the total weight of the salami.

The tests have been carried out at the sensory test room of the Dipartimento di Scienze Agrarie, degli Alimenti e dell'Ambiente (SAFE) of the Università degli Studi di Foggia.

The panel was constituted by 33 untrained tasters of age between 23 and 45 years. Each taster had three tastes, of which two identical (of Sample B type) and one different (of Sample A type).

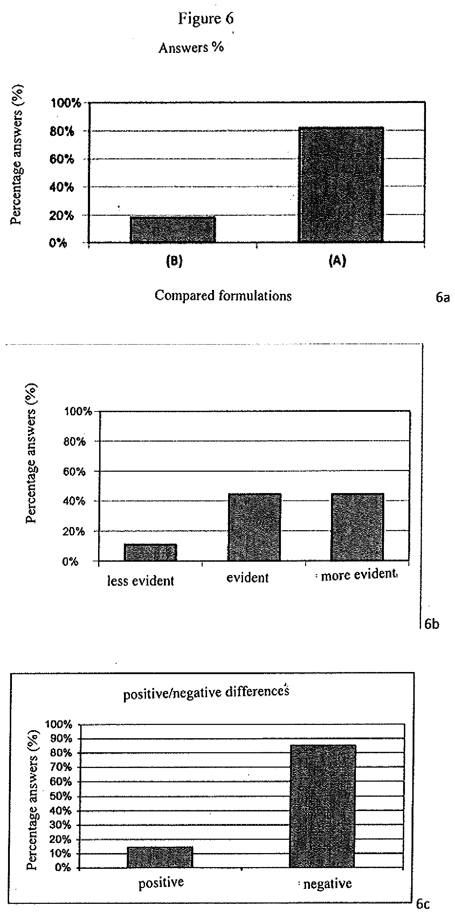

The minimum number of correct answers to indicate an α significance equal to 0.01 (1% probability of concluding that there is a perceptible difference when actually there is not, also defined as first level error or significance level) resulted to be equal to 18. The results showed that 27 tasters out of a total of 33 provided correct answers thus allowing to state that the test resulted to be 99% reliable. In particular, 82% of the referees (27 out of 33) recognized the different salami (Sample A) with respect to the two identical salamis containing the combination of the invention (Sample B), as it is shown in Figure 6a. Therefore the reliability of the triangle test resulted to be high.

Moreover, the panelists were asked to express an evaluation on the intensity level of the differences detected among the samples. The results showed that the differences have been evaluated as "evident" for the 44%, "little evident" for the 11% and "very evident" for the 44% (Figure 6b). Finally, these differences have been considered as positive for the samples containing the combination according to the invention (Figure 6c).

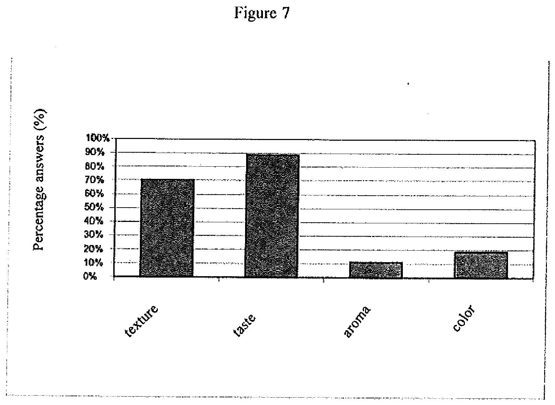

In addition, the referees were asked to express an evaluation about the sensory characteristics which determined the detected difference between the traditional salami (Sample A) and the other two salamis (Samples B) containing the combination of the invention. The differences detected and negatively considered for the sample without the combination according to the invention (A) are summarized in Figure 7. The negative differences mostly found in the sensory test for sample (A) are mainly:
- taste (89% of the referees recognized the difference) between the two kinds of salami, since salami (A) has been considered less pleasant;
- texture (70% of the referees recognized the difference) between the two kinds of salami, since salami (A) has been considered more compact and less juicy.

To conclude, the result obtained by the panel test pointed out that the salami of sample A, wherein part of the pork fat matter has been simply replaced with extra virgin olive oil, did not achieve positive evaluations with respect to the salami prepared with the combination of the invention. This result demonstrates that the reduction of the fat content wherein 50% of the total guanciale has been substituted with extra virgin olive oil, but without the use of the combination of the invention, proved to be less appreciated with respect to a salami wherein the pork fat matter has been totally substituted with the combination of the invention.

## Claims

1. A combination consisting of inulin, water and at least one fat with a low content of saturated fatty acids and cholesterol.

2. The combination according to claim 1, wherein said fat is selected from olive oil of any purity grade, corn oil, sunflower oil, peanut oil, colza oil, soybean oil, walnut oil, safflower oil, grape seed oil, wheat germ oil, rice bran oil, linseed oil, fish oil and mixtures thereof.

3. The combination according to any one of claims 1 or 2, wherein the inulin/water/fat reciprocal weight ratios are in the ranges 5-75/10-60/15-75.

4. The combination according to any one of claims 1 to 3, **characterized in that** it is in an emulsion form.

5. A process for the preparation of the combination according to any one of claims 1 to 4, comprising the incorporation of said inulin into said fat until the formation of a homogeneous compound, subsequently the addition of said water and mixing until obtaining an emulsion.

6. A food composition comprising the combination according to any one of claims 1 to 4, together with other edible components.

7. Use of the combination according to claims 1 to 4 or of the food composition according to claim 5, in the preparation of food formulations containing fats.

8. Use of the combination according to claim 7, in the preparation of food formulations supplemented with functional nutrients.

9. A food formulation comprising the combination according to claims 1 to 4 and/or the food composition according to claim 5.

10. The food formulation according to claim 9, which is selected from salumi, sausages and sweets.
